# EUROPEAN PATENT APPLICATION

(11) **EP 2 159 106 A1**
(43) Date of publication of application: **03.03.2010**
(21) Application number: 09168760.8
(22) Date of filing: 26.08.2009
(51) Int. Cl.: B60R 9/10, B60R 9/06

(54) **A load carrier which can be coupled to a vehicle, for instance a cycle carrier**

(30) Priority: 29.08.2008 NL 2001939
(71) Applicant: Twinny Load B.V., 8161 PH Epe (NL)
(72) Inventor: Kosinski, Roman, 6951 GT Dieren (NL)
(74) Representative: Dokter, Hendrik Daniel

(57) **Abstract**

Load carrier which can be coupled to a vehicle, comprising a fixed frame which can be coupled to the vehicle and a displaceable carrier frame for carrying a load coupled to the fixed frame by two pairs of arms pivotable according to a parallelogram construction, wherein under normal conditions of use the carrier frame is displaceable between a lowest position for loading or unloading of a load, and a highest position, in which the load carrier, coupled to the vehicle, can be transported with or without load, provided with displacing means for the carrier frame and with first locking means for locking the carrier frame in its highest position against a displacement in a horizontal direction transversely of the direction of transport of the vehicle.

## Description

The invention relates to a load carrier which can be coupled to a vehicle, comprising a fixed frame which can be coupled to the vehicle and a displaceable carrier frame for carrying a load coupled to the fixed frame by two pairs of arms pivotable according to a parallelogram construction, wherein under normal conditions of use the carrier frame is displaceable between a lowest position for loading or unloading of a load, and a highest position, in which the load carrier, coupled to the vehicle, can be transported with or without load, provided with displacing means for the carrier frame.

Such a load carrier is known from the Netherlands patent no. 1034946, in which is described a cycle carrier for mounting on a towing hook of a motor vehicle.

If this known cycle carrier is coupled to the towing hook of for instance a passenger car, it is possible to lower the displaceable carrier frame to street level, place one or two bicycles on the carrier frame, and subsequently lift the carrier frame to its highest position, after which the bicycles can in principle be transported. The great advantage of this cycle carrier is that it is very easy to use. Once the carrier has been coupled to the towing hook of a vehicle, the placing of one or more bicycles on the carrier requires no further physical exertion.

The known cycle carrier has the drawback that it is sensitive to the forces acting thereon during travel of the vehicle, which results in rapid wear. Rapid wear not only means little durability, but also represents a safety risk of this bicycle carrier.

It is an object of the invention to provide a load carrier which can be coupled to a vehicle and on which a load can be placed without physical exertion, which can withstand the mechanical forces acting during travel, which is durable and reliable, which has a compact construction and which can be mounted on a vehicle by a user in simple manner and is simple to operate in use.

These objects are achieved, and other advantages gained, with a load carrier of the type stated in the preamble, which is provided according to the invention with first locking means for locking the carrier frame in its highest position against a displacement in a horizontal direction transversely of the direction of transport of the vehicle.

By locking the carrier frame with the first locking means this carrier frame forms a rigid construction with the fixed frame, at least in transverse direction. Transverse forces exerted on the carrier frame during transport do not result in wear of the coupling between the carrier frame and the fixed frame, but are transmitted by the rigid construction to the coupling with the vehicle, for instance the towing hook, the design of which is intended for the purpose, among others, of absorbing such forces.

The first locking means are for instance formed by a lock in the fixed frame or the carrier frame and a locking element directed toward and co-acting with this lock on respectively the carrier frame or the fixed frame, which locking element is formed such that in the highest position of the carrier frame it drops with precise fit into the lock.

In an advantageous embodiment of a load carrier according to the invention, wherein the fixed frame in normal position of use comprises a first horizontal transverse beam and the carrier frame comprises two parallel longitudinal beams directed in longitudinal direction of the fixed frame, the first locking means are formed by the end parts of the longitudinal beams which are directed toward the fixed frame and are formed such that they enclose the transverse beam of the fixed frame in precisely fitting manner in the highest position of the carrier frame.

Yet another embodiment of a load carrier according to the invention is provided with second locking means for locking the carrier frame in its highest position against a displacement in an upward vertical direction.

In the case of a load carrier wherein in normal position of use the fixed frame comprises two vertical columns which are connected on their underside by a first horizontal transverse beam, wherein the columns and the first transverse beam enclose an angle directed toward the carrier frame, and the carrier frame comprises a second horizontal transverse beam on its side facing toward the fixed frame, the second locking means are for instance formed by the second transverse beam, which is formed such that in the highest position of the carrier frame it is received in precisely fitting manner in the angle enclosed by the columns and the first transverse beam.

Although the displacing means in principle secure the carrier frame in its highest position, a load carrier according to the invention is preferably provided with third locking means for locking the carrier frame in its highest position against a displacement in a downward vertical direction.

With such third locking means an extra safety is provided in the case of failure of the displacing means and the locking provided by these means.

The displacing means in a load carrier according to the invention comprise for instance a screw spindle which is coupled on its upper side to the fixed frame for pivoting about a horizontal transverse axis, and is coupled on its lower side to the carrier frame for pivoting about a horizontal transverse axis. A screw spindle can in principle be operated by numerous auxiliary means, such as a handle.

In one embodiment such a screw spindle is provided with engaging means for engagement by a battery-powered drill.

This embodiment provides the practical advantage that battery-powered drills are commonplace, and the buyer of the load carrier who has a battery-powered drill can save the costs of a drive for the screw spindle.

In yet another embodiment the screw spindle can be driven with an electric motor.

A permanently present electric motor, for instance a 12-Volt motor, provides the advantage that it can be easily connected to the electrical circuit of a vehicle.

In a practical advantageous embodiment the pivotable arms in a load carrier according to the invention enclose in normal position of use an acute angle (α) with the normal in the highest position of the carrier frame, wherein preferably (α) ≤ 45°, and more preferably (α) ≤ 30°.

The angle (α) in the highest position determines the maximum distance between fixed frame and carrier frame that can be realized in horizontal direction. The more acute the angle (α) is, the greater the angle through which the arms must be rotated for horizontal orientation thereof, and the further the outer end of these arms coupled to the carrier frame will be removed from the fixed frame.

A relatively great distance provides an advantage in the case easy access is required to the boot or tailgate of the vehicle when a load carrier is coupled to the vehicle, without the load, for instance a bicycle, having to be removed from the carrier frame.

A load carrier according to the invention is in principle suitable for transporting diverse items.

In an embodiment which is particularly suitable for transporting bicycles, with or without auxiliary motor, the carrier frame is provided with at least one transverse channel for placing of a cycle therein.

A load carrier according to the invention is also suitable for coupling to diverse vehicles, such as passenger cars, delivery vans, trailers or caravans.

In an embodiment which is particularly suitable for coupling to a motor vehicle provided with towing hook, the fixed frame is provided with coupling means for coupling the load carrier to the towing hook of a vehicle.

The invention will be elucidated hereinbelow on the basis of an exemplary embodiment and with reference to the drawings. In the drawings
Fig. 1 shows an exploded view of a part of an embodiment of a bicycle carrier according to the invention,
Fig. 2 is a side view of a part of the bicycle carrier shown in fig. 1 in the lowest position of the carrier frame,
Fig. 3 is a side view of a part of the bicycle carrier shown in fig. 1 in the highest position of the carrier frame,
Fig. 4 is a side view of a part of the bicycle carrier shown in fig. 1 in the position of the carrier frame in which the arms of the parallelogram construction are oriented horizontally, and
Fig. 5 is an exploded view of a detail of a part of the cycle carrier shown in fig. 1.

Corresponding components in the figures are designated with the same reference numerals.

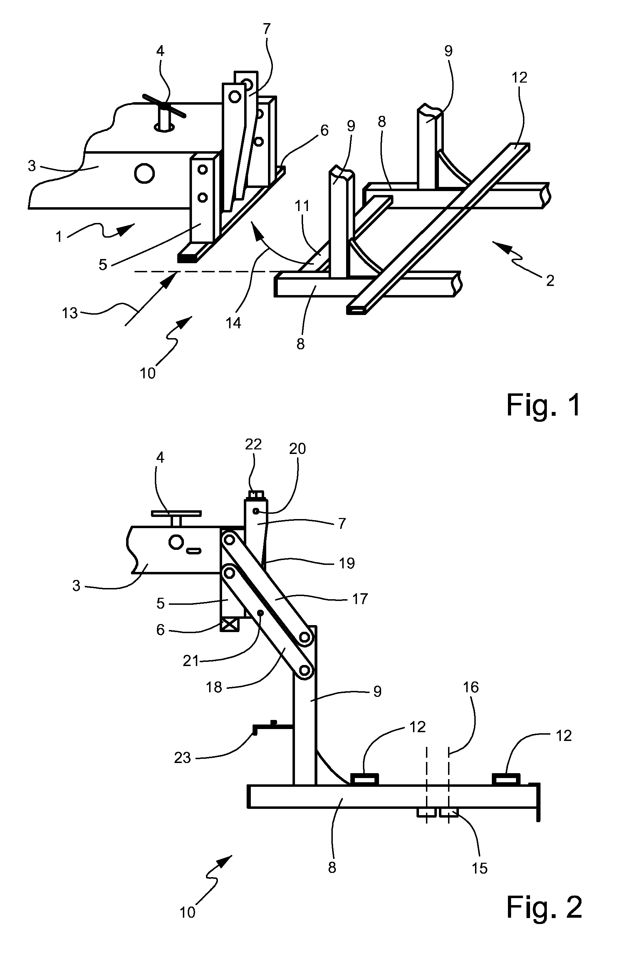

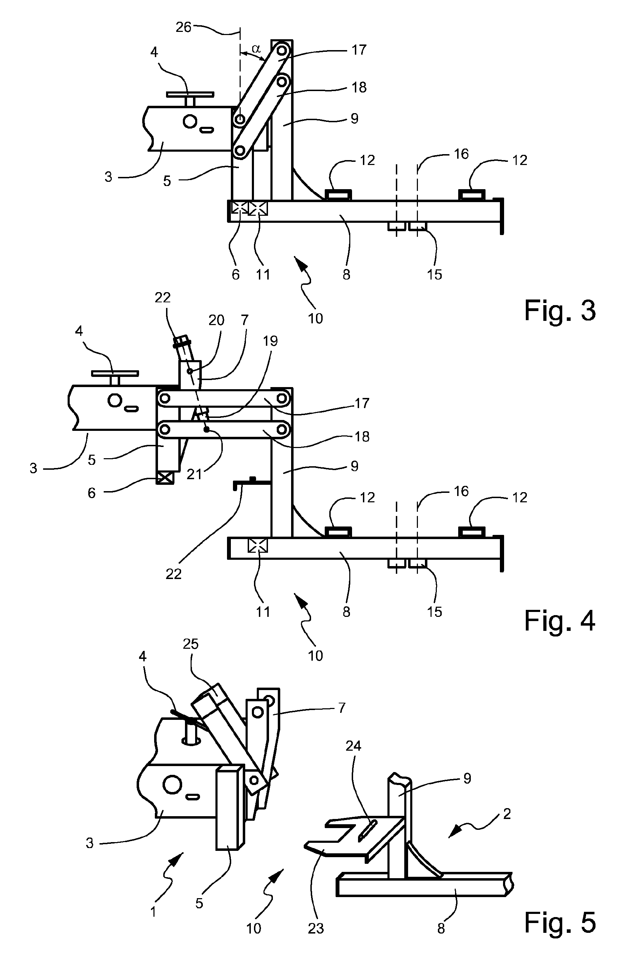

Fig. 1 shows parts of a bicycle carrier 10, with a fixed frame 1 and a carrier frame 2. Fixed frame 1 comprises, among other parts, a steel U-profile 3 with its open side directed downward, in which a coupling mechanism (not shown) which can be operated with a wing screw 4 is received for the purpose of coupling carrier 10 onto the ball of the towing hook of a vehicle. Welded onto either side of U-profile 3 are vertical columns 5 which are connected on their underside by a transverse beam 6. From the transverse beam 7 and the rear end of horizontal U-profile 3 extends a vertical U-profile 7, in which a screw spindle (shown in fig. 2 and 4) is pivotally suspended. Carrier frame 2 comprises, among other parts, two parallel longitudinal beams 8 which are oriented in the longitudinal direction of fixed frame 1 and the end parts of which directed toward fixed frame 1 are formed such that in the highest position of carrier frame 2 they enclose transverse beam 6 of fixed frame 1 in precisely fitting manner. Fixed frame 1 and carrier frame 2 are coupled to respective vertical columns 5, 9 by two pairs of arms pivotable according to a parallelogram construction (shown in fig. 2), wherein carrier frame 2 is displaceable between a lowest position (shown in fig. 2) and a highest position (shown in fig. 3). The two longitudinal beams 8 are connected on their end facing toward fixed frame 1 by a transverse beam 11, and also by two cycle channels 12 for placing a cycle therein. The end parts of longitudinal beams 8 of carrier frame 2 which face toward fixed frame 1 are formed such that in the highest position of carrier frame 2 they enclose transverse beam 6 of fixed frame 1 in precisely fitting manner (shown by arrow 13), whereby carrier frame 2 is locked in its highest position against a displacement in a horizontal direction transversely of the direction of transport of the vehicle. Columns 5 and first transverse beam 6 of fixed frame 1 enclose an angle directed toward carrier frame 2 in a manner such that, in the highest position of carrier frame 2, second transverse beam 11 thereof is received in precisely fitting manner in the angle enclosed by columns 5 and first transverse beam 6 (indicated by arrow 11), whereby carrier frame 2 is locked in its highest position against a displacement in an upward vertical direction (as well as against a displacement in forward horizontal direction).

Fig. 2 shows a part of cycle carrier 10 shown in fig. 1 in the lowest position of carrier frame 2 with, in addition to the above mentioned components, a connecting beam 15 for longitudinal beams 8 on which is mounted an upright 16 against which for instance cycles placed in cycle channels 12 can be secured, a pair of coupling arms 17, 18 pivotable according to a parallelogram construction and a screw spindle 19. Screw spindle 19 is suspended at its upper end for pivoting on an axis 20 in upright U-profile 7 (which is coupled to fixed frame 1), and is coupled at its lower end for pivoting on an axis 21 by lower coupling arms 18 (which are coupled to carrier frame 2). The figure further shows an engaging head 22 for a battery-powered drill on the upper end of the screw spindle, and a locking element 23 for locking carrier frame 2 in its highest position against a displacement in downward direction.

Fig. 3 shows a part of cycle carrier 10 shown in fig. 1 in the highest position of carrier frame 2. In this position coupling arms 17, 18 enclose an acute angle (α) with the normal 26. Shown is how in this position carrier frame 2 is locked against displacement in upward and forward direction (to the left in the figure) by receiving the second transverse beam 11 in the angle enclosed by first transverse beam 6 and columns 5.

Fig. 4 shows a part of the cycle carrier 10 shown in fig. 1 in the horizontal position of coupling arms 17, 18, wherein the distance between fixed frame 1 and carrier frame 2, and therefore the distance between a load on carrier frame 2 and a boot lid or tailgate of a relevant vehicle, is maximal.

Fig.5 shows a horizontal plate 23 between vertical columns 9, with a standing transverse edge 24 for hooking thereto of a bracket 25 in the highest position of carrier frame 2, this bracket being coupled pivotally to fixed frame 1. Bracket 25 locks carrier frame 2 in its highest position against a displacement in backward direction (to the right in the figure), and for the purpose of relieving the load on screw spindle 19 (and by way of additional safety in case of breakage) against a displacement in downward direction.

## Claims

1. Load carrier (10) which can be coupled to a vehicle, comprising a fixed frame (1) which can be coupled to the vehicle and a displaceable carrier frame (2) for carrying a load coupled to the fixed frame by two pairs of arms (17, 18) pivotable according to a parallelogram construction, wherein under normal conditions of use the carrier frame (1) is displaceable between a lowest position for loading or unloading of a load, and a highest position, in which the load carrier (10), coupled to the vehicle, can be transported with or without load, provided with displacing means (7, 19) for the carrier frame (2), **characterized in that** it is provided with first locking means (8, 6) for locking the carrier frame (2) in its highest position against a displacement in a horizontal direction transversely of the direction of transport of the vehicle.

2. Load carrier (10) as claimed in claim 1, **characterized in that** the first locking means are formed by a lock in the fixed frame or the carrier frame and a locking element directed toward and co-acting with this lock on respectively the carrier frame or the fixed frame, which locking element is formed such that in the highest position of the carrier frame it drops with precise fit into the lock.

3. Load carrier (10) as claimed in either of the claims 1-2, wherein the fixed frame (1) in normal position of use comprises a first horizontal transverse beam (6) and the carrier frame (2) comprises two parallel longitudinal beams (8) directed in longitudinal direction of the vehicle, **characterized in that** the first locking means are formed by the end parts of the longitudinal beams (8) which are directed toward the fixed frame and formed such that they enclose the transverse beam (6) of the fixed frame (1) in precisely fitting manner in the highest position of the carrier frame (2).

4. Load carrier (10) as claimed in either of the claims 1-2, **characterized in that** it is provided with second locking means (8, 5, 6) for locking the carrier frame (2) in its highest position against a displacement in an upward vertical direction.

5. Load carrier (10) as claimed in any of the claims 1-4, wherein in normal position of use the fixed frame (1) comprises two vertical columns (5) which are connected on their underside by a first horizontal transverse beam (6), wherein the columns (5) and the first transverse beam (6) enclose an angle directed toward the carrier frame (2), and the carrier frame (2) comprises a second horizontal transverse beam (11) on its side facing toward the fixed frame (1), **characterized in that** the second locking means are formed by the second transverse beam (11), which is formed such that in the highest position of the carrier frame (2) it is received in precisely fitting manner in the angle enclosed by the columns (5) and first transverse beam (6).

6. Load carrier (10) as claimed in any of the claims 1-5, **characterized in that** it is provided with third locking means (23, 24, 25) for locking the carrier frame (2) in its highest position against a displacement in a downward vertical direction.

7. Load carrier (10) as claimed in any of the claims 1-6, **characterized in that** the displacing means comprise a screw spindle (19) which is coupled on its upper side to the fixed frame (1) for pivoting about a horizontal transverse axis (20), and is coupled on its lower side to the carrier frame (2) for pivoting about a horizontal transverse axis (21).

8. Load carrier (10) as claimed in claim 7, **characterized in that** the screw spindle (19) is provided with engaging means (22) for engagement by a battery-powered drill.

9. Load carrier (10) as claimed in claim 7, **characterized in that** the screw spindle (19) can be driven with an electric motor.

10. Load carrier (10) as claimed in any of the claims 1-9, **characterized in that** the pivotable arms (17, 18) enclose in normal position of use an acute angle (α) with the normal (26) in the highest position of the carrier frame (2).

11. Load carrier (10) as claimed in claim 10, **characterized in that** the acute angle (α) ≤ 45°.

12. Load carrier (10) as claimed in claim 10, **characterized in that** the acute angle (α) ≤ 30°.

13. Load carrier (10) as claimed in any of the claims 1-12, **characterized in that** the carrier frame (2) is provided with at least one transverse channel (12) for placing of a cycle therein.

14. Load carrier (10) as claimed in any of the claims 1-13, **characterized in that** the fixed frame (1) is provided with coupling means (4) for coupling the load carrier (10) to the towing hook of a vehicle.
